# EUROPÄISCHE PATENTSCHRIFT

(11) **EP 3 575 022 B1**
(45) Veröffentlichungstag und Bekanntmachung des Hinweises auf die Patenterteilung: **08.04.2020**
(21) Anmeldenummer: 18174788.2
(22) Anmeldetag: 29.05.2018
(51) Int. Cl.: B23B 27/10, B23B 27/16, B23B 29/04

(54) **WERKZEUGSYSTEM**
TOOL SYSTEM
SYSTÈME D'OUTIL

(43) Veröffentlichungstag der Anmeldung: 04.12.2019
(60) Teilanmeldung: 20159135.1
(73) Patentinhaber: CeramTec GmbH, 73207 Plochingen (DE)
(72) Erfinder: HENZLER, Uwe, 73269 Hochdorf (DE); NITSCHE, Michael, 73061 Ebersbach (DE)

(56) Entgegenhaltungen:
- EP-A1- 1 841 555
- EP-A1- 3 219 421
- WO-A1-2017/003343
- DE-A1-102016 200 195
- JP-A- H07 227 702
- US-A1- 2006 140 728
- US-A1- 2007 283 794

## Beschreibung

Die Erfindung betrifft ein Werkzeugsystem gemäß dem Oberbegriff des Anspruchs 1. Ein solches Werkzeugsystem ist aus der JP H07 227702 A bekannt.

Zur prozessoptimierten Bearbeitung von schwer zerspanbaren Materialien DTC (difficult-to-cut materials) wie z.B. Nickelbasislegierungen, sogenannte Super-Alloys und Titanlegierungen, im folgenden ISO-S Materialien oder DTC-Materialien genannt, welche hauptsächlich im Bereich der Luft + Raumfahrt und Energy-Generation verbreitet sind ist es erforderlich, dass der Bereich der Bearbeitung mittels eines Mediums gekühlt wird. Dabei ist es möglich mittels den Fluiden, die unter Hochdruck an ihren Bestimmungsort gelangen, die Erzeugung der Späne und deren Lenkung zu beeinflussen. Durch eine zielgerichtete Kühlung in der Scherzone der Spanentstehung im Bereich von 800 bis 1100° kann eine Standzeiterhöhung des Schneidstoffes, bzw. der Schneidplatte bei gleichzeitiger Erhöhung der Bearbeitungsparameter erreicht werden.

Der Stand der Technik umfasst verschiedene Offenbarungen von Kühlkanälen mit denen Kühlmittel dem Bearbeitungsbereich zugeführt wird.

So offenbart z.B. die US 9,873,154 ein Schneidwerkzeug mit einem Grundkörper zur Aufnahme einer Schneidplatte und eine Pratze zum Spannen der Schneidplatte am Grundwerkzeug, wobei die Pratze und der Grundkörper Fluidkanäle umfassen. Zwischen der Pratze und dem Grundkörper des Schneidwerkzeugs ist eine Dichtung angeordnet. Im Falle einer verschlissenen Schneidplatte ist bei deren Auswechslung auch die Dichtung zu wechseln. Nur so kann die Dichtheit des Schneidwerkzeugs gewährleistet werden.

Die WO 2014/076689 offenbart ein Werkzeughalter mit einem Grundkörper und einer Pratze die eine Schneidplatte an dem Grundkörper spannt, wobei der Grundkörper und die Pratze einen Kühlmittelkanal aufweisen. Zwischen dem Grundkörper und der Pratze ist ein Kühlmittelpfropfen angeordnet, der den Kühlmittelkanal im Grundkörper mit dem Kühlmittelkanal in der Pratze verbindet. Dabei besteht der Kühlmittelpfropfen aus einem komprimierbaren Material wie beispielsweise Polymer, Polyurethan Elastomere oder ähnlichem, sodass er beim Spannen der Schneidplatte komprimiert werden kann.

Ein gattungsgemäßes Werkzeugsystem beschreibt JP H07 227702 A, als nächstliegender Stand der Technik. Das Dichtmittel ist hier ein O-Ring, dessen Werkstoff elastisch ist. Das Dichtmittel muss bei einem Tausch der Schneidplatte gewechselt werden und unterliegt Verschleiß. Außerdem kann es sich beim Spannen aus der gewünschten Position bewegen. Dadurch bleibt die Verbindung möglicherweise dauerhaft nicht dicht.

WO 2017/003343 A1 beschreibt ein Werkzeugsystem mit einem Werkzeughalter, der einen Plattensitz zur Aufnahme einer Schneidplatte und entfernt von diesem Plattensitz eine Anlagefläche aufweist, mit einem Spannelement, das eine Öffnung mit einem Anschlag zur Aufnahme eines Spannmittels und eine Anlagefläche aufweist, wobei die Anlagefläche eine Schnittstelle zwischen dem Werkzeughalter und dem Spannelement bildet und wobei sowohl der Werkzeughalter wie auch das Spannelement Leitungsabschnitte aufweisen und die Schnittstelle ein Dichtmittel umfasst.

EP 1 841 555 A1, veröffentlicht unter WO 2006/077363 A1, ist mit WO 2017/003343 A1 vergleichbar.

US 2006/140728 A1 beschreibt ebenfalls ein Werkzeugsystem mit einem Werkzeughalter, der einen Plattensitz zur Aufnahme einer Schneidplatte aufweist, mit einer Flüssigkeitskühlung.

DE 10 2016 200195 A1 beschreibt ein Trägerwerkzeug mit einem Spannelement mit einer Spannelementnase und mit einer Schneidplatte mit einer Spannmulde auf der Schneidplattenoberfläche, zur spanenden Bearbeitung von Werkstücken, wobei die Spannmulde eine ringförmige Ausbuchtung mit einem Muldenboden aufweist, die Ausbuchtung über eine Ringfläche vom Muldenboden in die Schneidplattenoberfläche übergeht und die Ausbuchtung eine Erhebung umschließt, deren Spitze oberhalb des Muldenbodens und unterhalb der Schneidplattenoberfläche liegt, und die Spannelementnase in die Spannmulde eingreift und diese dadurch auf dem Trägerwerkzeug spannt. Eine Flüssigkeitskühlung wird nicht erwähnt.

US 2007/283794 A1 beschreibt ein Werkzeugsystem mit einem Werkzeughalter mit einer integrierten Flüssigkeitskühlung, die Kühlkanäle umfasst.

Ausgehend vom Stand der Technik liegt der Erfindung die Aufgabe zugrunde, ein Werkzeugsystem nach dem Oberbegriff des Anspruchs 1 so zu verbessern, dass bei gleichbleibender oder verbesserter Qualität, die Prozessparameter optimiert werden und dadurch die Herstellkosten reduziert werden können.

Erfindungsgemäß wird diese Aufgabe durch ein Werkzeugsystem mit den Merkmalen des Anspruchs 1 gelöst.

Zur prozessoptimierten Bearbeitung von schwer zerspanbaren Materialien DTC (difficult-to-cut materials) wie z.B. Nickelbasislegierungen, sogenannte Super-Alloys und Titanlegierungen, im folgenden ISO-S Materialien oder DTC-Materialien genannt, welche hauptsächlich im Bereich der Luft + Raumfahrt und Energy-Generation verbreitet sind ist es erforderlich, dass der Bereich der Bearbeitung mittels eines Mediums gekühlt wird. Dabei ist es möglich mittels den Fluiden, die unter Hochdruck bis zu 120 bar an ihren Bestimmungsort gelangen, die Erzeugung der Späne und deren Lenkung zu beeinflussen. Durch eine zielgerichtete Kühlung in der Scherzone der Spanentstehung im Bereich von 800 bis 1100° kann eine Standzeiterhöhung des Schneidstoffes, bzw. der Schneidplatte bei gleichzeitiger Erhöhung der Bearbeitungsparameter erreicht werden. Je höher die Kühlqualität im Bereich der Scherzone der Spannentstehung ist, desto höher können die Prozessparameter wie beispielsweise Vorschubgeschwindigkeit und Schnitttiefe festgelegt werden. Dadurch können die Herstellkosten reduziert werden.

Die Erfindung betrifft ein Werkzeugsystem zur spanenden Bearbeitung von Werkstücken, umfassend einen Werkzeughalter mit einem Spannelement mit einer Spannelementnase und mit einer Schneidplatte, wobei die Schneidplatte eine Mulde auf der Oberseite der Schneidplatte aufweisen kann. Wenn die Schneidplatte eine Mulde aufweist, enthält diese bevorzugt einen Muldenboden, der über eine Ringfläche in die Oberseite der Schneidplatte übergeht. In einer speziellen Ausführungsform kann in der Mulde eine Erhebung angeordnet sein, deren Spitze mit Abstand zur Schneidplattenoberfläche endet. Eine Nase bzw. ein Vorsatz, angeordnet am ersten Ende eines Spannelements greift im gespannten Zustand in die Mulde der Schneidplatte ein und spannt diese dadurch auf dem Werkzeughalter, dem Grundkörper des Werkzeugsystems. Die Nase kann eine zur Ringfläche der Mulde kongruente Ringfläche aufweisen. Die Nase kann auch an einer am Spannelement angeordneten Druckplatte angeordnet sein. Im gespannten Zustand des Werkzeugsystems wird mittels eines Spannmittels eine Kraft über das Spannelement und die Ringfläche der Nase in die Mulde der Schneidplatte eingebracht. Die Krafteinleitung erfolgt ringsum die Ringfläche der Nase des Spannelements auf die Ringfläche der Mulde der Schneidplatte. Aufgrund der auf der ganzen Ringfläche (360°) anliegenden Kraft ist eine sichere, positionsgetreue Befestigung der Schneidplatte im Werkzeugsystem möglich.

Aufgrund der Anordnung der Ringfläche in der Mulde der Schneidplatte und der Ringfläche an der Nase des Spannelements, sowie der Anschlagflächen am Spannelement und am Werkzeughalter kann ein flächenhafter Kontaktbereich zwischen der Nase des Spannelements und der Mulde der Schneidplatte beim Spannen der Schneidplatte erfolgen. Dieser Kontaktbereich erstreckt sich komplett über die gesamten Ringflächen, sodass in einem Bereich von 360 Grad ein Krafteintrag in die Schneidplatte entsteht und diese positionsgetreu und sicher im Plattensitz gehalten wird.

In einer bevorzugten Anwendung kann eine Schneidplatte mit einer ebenen Oberfläche, ohne Mulde, Verwendung finden. Dann weist das Spannelement eine gegenüber der Oberfläche der Schneidplatte angeordnete ebene Spannfläche auf. Diese Spannfläche kann auch an einer Druckplatte angeordnet sein. Die Druckplatte kann beweglich am Spannelement, zwischen Spannelement und Schneidplatte angeordnet sein. Dadurch können beim Spannen der Schneidplatte, die Toleranzen die bei der Herstellung des Werkzeugsystems entstehen, ausgeglichen und ein sicheres Spannen der Schneidplatte mit glatter Oberfläche im Werkzeughalter gewährleistet werden.

Der Spannmechanismus zum Spannen der Schneidplatte weist ein außerhalb der Mitte des Spannelements angeordnetes Spannmittel auf. Eine an einem zweiten Ende des Spannelements angeordnete Anlagefläche, beispielsweise eine Gleitfläche, steht während des Spannvorgangs in Wirkverbindung mit einer am Werkzeughalters angeordneten Anlagefläche. Die Anlagefläche des Spannelements und die Anlagefläche des Werkzeughalters bilden die Schnittstelle zwischen Spannelement und Werkzeughalter.

Bei einer erfindungsgemäßen Ausführungsform des Werkzeugsystems ist die Schnittstelle in einem Winkel zur Oberseite des Werkzeughalters bzw. der Flachseite des Spannelements angeordnet. Dabei sind die Anlageflächen in einem Winkel zur Spannrichtung des Spannelements angeordnet. Dadurch bewegt sich beim Spannvorgang das Spannelement relativ zum im Werkzeugsystem ortsfest angeordneten Werkzeughalter und spannt die Schneidplatte wiederholbar, positionsgetreu im Plattensitz des Werkzeughalters. Die relative Bewegung des Spannelements zum Werkzughalter weist einen zur Spannrichtung quer angeordneten Bewegungsanteil auf. Mit anderen Worten, das Spannelement bewegt sich beim Spannvorgang in Richtung auf die Schneidplatte zu (in Richtung des Werkzeughalters), um das sichere Spannen der Schneidplatte zu ermöglichen und zugleich bewegt sich das Spannelement quer zur Spannrichtung, um die Schneidplatte exakt im Plattensitz zu positionieren.

Das Spannelement und der Werkzeughalter weisen jeweils wenigstens einen Kanal auf, der für den Transport von Fluidmitteln als Kühlmittel vorgesehen sind. Die im Folgenden offenbarten Merkmale eines Fluidkanals gelten auch für mehrere Kanäle, wenn vorhanden. Die Abmessungen (Querschnitt, Durchmesser, etc.) eines Fluidkanals können an die Fluidmedien angepasst sein. So ist ein zylindrischer Querschnitt des Kanals beispielsweise in Form von einer Bohrung oder auch ein von einer zylindrischen Formen abweichender, beispielsweise elliptischer Querschnitt möglich. Das Spannelement und der Werkzeughalter können jeweils einen oder mehrere Fluidkanäle aufweisen. Die Fluidkanäle können in beliebigen Winkeln zur Längsachse des Werkzeugsystems angeordnet sein. Die Fluidkanäle enden im Bereich der Schneidplatte bzw. des Plattensitzes.

So ist es beispielsweise möglich, dass der Fluidkanal im Werkzeughalter im Bereich des Plattensitzes, in dem die Schneidplatte angeordnet ist, endet. Bei diesem Ausführungsbeispiel kann der Fluidkanal unterhalb der Schneidplatte, im vorderen Bereich der Schneidplatte, in Richtung des zu bearbeitenden Werkstücks enden. Dabei kann der Werkzeughalter in Richtung des Werkstücks die Schneidplatte geringfügig überragen.

Der Fluidkanal im Spannelement kann oberhalb der Schneidplatte im ersten Endbereich des Spannelements enden. Dadurch ist es möglich die Zufuhr des Fluids zielgerichtet an die Scherzone der Spanentstehung zu leiten. Zu diesem Zwecke kann der Fluidkanal im Spannelement und im Werkzeughalter quer, d.h. in einem Winkel zur Längsachse des Werkzeugsystems angeordnet sein.

Die Fluide, können sowohl einen flüssigen wie auch gasförmigem Zustand aufweisen.

Im Bereich des zweiten Endes des Spannelements, in dem die Anlagefläche des Spannelements mit der Anlagefläche des Werkzeughalters des Werkzeugsystems zusammen wirkt, befindet sich die Schnittstelle zwischen Spannelement und Werkzeughalter. Der Kanal in dem Spannelement beginnt an dieser Schnittstelle, an der Anlagefläche und endet im Bereich des ersten Endes des Spannelements. Die Mündung des Kanals ist so angeordnet, dass das Fluid, welches durch den Kanal fließt und an der Mündung austritt, zielgerichtet an die zu kühlende Stelle geleitet werden kann. Diese Stelle kann sowohl der Bereich der Scherzone bei der Spanerzeugung und/ oder einen Bereich der Schneidplatte betreffen. Um den Fluidstrahl zielgenau auszurichten kann die Mündung des Fluidkanals, in einem Winkel zur Oberseite des Spannelements angeordnet sein. Die Mündung des Kanals kann dieselbe Form ausweisen wie der Kanal im Inneren des Spannelements. Die Mündung kann auch in ihrer Form bzw. Ausgestaltung von der Form des Kanals abweichen. Die Mündung kann mehrere neben- oder übereinander angeordnete Ausgänge umfassen. Ein Fluidkanal kann im Bereich der Mündung in mehrere Ausgänge übergehen. Damit der Fluidstrahl gezielt an die Scherzone der Spanentstehung gerichtet werden kann, kann die Mündung des Fluidkanals beispielsweise auch eine Düse umfassen. Durch eine entsprechende angeordnete Düse kann der Fluidstrahl sowohl in seiner Form als auch in seiner Richtung verändert werden. Die Düse kann beweglich gelagert sein.

Der Kanal im Werkzeughalter des Werkzeugsystems reicht von einer Anschlussstelle, an der die Fluidversorgung angekoppelt ist, bis zur Schnittstelle, der Anlagefläche des Werkzeughalters. Die Fluidversorgung an der Anschlussstelle erfolgt mit an sich bekannten Kupplungen. Im Werkzeughalter kann sich der Fluidkanal teilen, sodass ein erster Abschnitt des Kanals bis zur Schnittstelle führt und ein zweier Abschnitt des Kanals bis in den Bereich des Plattensitzes führt. Die Mündung des Kanals im Bereich des Plattensitzes ist so angeordnet und ausgebildet, dass eine optimale Kühlung der Schneidplatte und/ oder der Scherstelle der Spanentstehung möglich ist. Die Mündung des Kanals im Bereich des Plattensitzes kann dieselbe Form ausweisen wie der Kanal im Inneren des Grundkörpers. Die Mündung kann mehrere neben- oder übereinander angeordnete Ausgänge umfassen. Ein Fluidkanal kann im Bereich der Mündung in mehrere Ausgänge übergehen. Damit der Fluidstrahl gezielt an die Scherzone der Spanentstehung gerichtet werden kann, kann die Mündung des Fluidstrahls eine Düse umfassen. Durch eine entsprechende Düse kann der Fluidstrahl sowohl in seiner Form als auch in seiner Richtung verändert werden. Die Düse kann beweglich gelagert sein. Es ist auch möglich, dass der Werkzeughalter des Werkzeugsystems im Bereich des Plattensitzes einen Vorsprung aufweist und sich somit über den Plattensitz hinaus in Richtung des zu bearbeitenden Werkstücks erstreckt. Die Mündung des Kanals kann in diesem Vorsprung angeordnet sein. Eine im Plattensitz positionierte Schneidplatte kann vor diesem Vorsprung enden. Bei diesem Ausführungsbeispiel ist es erforderlich, dass im Einsatz, das Werkzeugsystem geneigt in einem Winkel zum Werkstück angeordnet ist. Der Winkel wird so gewählt, dass der Abstand der Schneide der Schneidplatte zum Werkstück geringer ist als der Abstand des Vorsprungs zum Werkstück. Trotzdem kann die Schneidplatte mittels des Fluidstrahls, der im Vorsprung vor der Schneidplatte austritt, gekühlt werden. Der Fluidstrahl kann zielgerichtet an seinen Bestimmungsort, beispielsweise die Schneidplatte oder die Scherstelle der Spanentstehung, gerichtet werden.

Um den Übergang des Kanals vom Grundkörper in den Kanal des Spannelements an der Schnittstelle dicht auszubilden, ist erfindungsgemäß ein Element, ein Dichtelement, in den Ansprüchen auch als Dichtmittel bezeichnet, vorgesehen. Das Dichtelement kann in Form eines zylindrischen Elements mit einer Fläche ausgebildet sein. In diesem Falle entspricht das Dichtelement einem in Längsrichtung abgeflachten zylindrischen Körper. Das Dichtelement weist wenigstens eine Öffnung auf, die den Kanal des Werkzeughalters mit dem Kanal des Spannelements verbindet. Die Form der Öffnung entspricht vorzugsweise der Form der Kanäle, zumindest im Bereich der Schnittstelle. Die Öffnung erstreckt sich von der Mantelfläche bis zur Flachseite durch das Dichtelement hindurch. Zusätzlich kann das Dichtelement eine Ausnehmung in Form eines Langloches aufweisen. In diese Ausnehmung wird ein Befestigungselement eingeführt, mittels dem das Dichtelement und das Spannelement in Querrichtung arretiert werden. Mit Querrichtung ist eine Richtung in einem Winkel zur Längsachse des Werkzeughalters beziehungsweise des Spannelements verstanden.

Das Befestigungselement weist an einem ersten Ende einen Befestigungsabschnitt beispielsweise in Form eines Außengewindes auf und wird in einem Aufnahmebereich beispielsweise einem Innengewinde in Werkzeughalter formschlüssig befestigt. Es sind auch andere an sich bekannte Befestigungsarten, beispielsweise eine Presspassung möglich. Im Anschluss an den Befestigungsabschnitt weist das Befestigungselement ein Führungsabschnitt auf. Der Führungsabschnitt wirkt mit der Ausnehmung, dem Langloch, des Dichtelements zusammen. Im eingebauten Zustand des Dichtelements im Werkzeughalter, ist dadurch das Dichtelement verliersicher angeordnet. Das Dichtelement ist beweglich gelagert, es kann um seine Längsachse rotieren. Zusätzlich ist es in Richtung seiner Längsachse in axialer Richtung verliersicher angeordnet.

Das Befestigungselement überragt mit seinem Führungsabschnitt das Dichtelement und greift in eine Nut im Spannelement. Dadurch kann das Spannelement in Querrichtung arretiert werden. Die Weite bzw. Breite der Nut im Spannelement, ist an den Durchmesser bzw. an die Breite des Führungsabschnitts des Befestigungsmittels in diesem Bereich angepasst, sodass der Führungsabschnitt in die Nut eingreifen kann. Dazu ragt das Befestigungselement über die Anschlagfläche des Werkzeughalters und über die Flachseite des Dichtelements hinaus.

Die Ausnehmung im Dichtelement, in die das Befestigungselement eingreift, ist so ausgebildet, dass eine bewegliche Anordnung um die Längsachse, des Dichtelements möglich ist. In axialer Richtung, welche der oben beschriebenen Querrichtung entspricht, ist das Dichtelement verliersicher angeordnet.

In einer alternativen erfindungsgemäßen Ausführung, wird die verliersichere Anordnung des Dichtelements in Querrichtung mittels eines Befestigungsmittels in Form eines an sich bekannten federnden Druckstücks sichergestellt. Dazu weist das Dichtelement an seinem Umfang eine Ausnehmung in Form einer Rille auf, in die im montierten Zustand die Kugel des Befestigungsmittels greift. Dies sichert die Beweglichkeit des Dichtelements um seine Längsachse und zusätzlich wird das Dichtelement in Querrichtung verliersicher gehalten. Die formschlüssige bewegliche Anordnung des Dichtelements, an dessen Außenumfang, mittels der Kugel des federnden Druckstücks wird bevorzugt angewandt, wenn das Dichtelement in Längsrichtung eine kleine Ausdehnung hat und deshalb neben der Öffnung zur Verbindung der Leitungsabschnitte nicht ausreichend Platz vorhanden ist, um einen Ausnehmung die ein Befestigungsmittel aufnehmen kann, vorzusehen. Bei dieser Ausführung ist dann vorgesehen, dass die Arretierung des Spannelements in Querrichtung unabhängig des Befestigungsmittels erfolgt. Dazu kann das Spannelement eine Nut aufweisen, in die beispielsweise ein Befestigungsmittel in Form eines stiftförmigen Arretierungsmittels, welches ortsfest im Werkzeughalter angeordnet ist, greift.

Der Aufnahmebereich des Dichtelements im Werkzeughalter des Werkzeugsystems ist entsprechend der Außenform des Dichtelements gestaltet. Weist das Dichtelement eine im Wesentlichen zylindrische Form auf, so entspricht dieser Aufnahmebereich im Werkzeughalter einer zylindrischen Bohrung, bzw. einem Teilbereich einer zylindrischen Bohrung. Dadurch ist die Rotationbeweglichkeit des Dichtelements gewährleistet.

Bei einer nicht erfindungsgemäßen Alternative eines Werkzeugsystems kann das Dichtelement auch im oder am Spannelement angeordnet sein. Der Aufnahmebereich des Dichtelements ist dabei im Spannelement angeordnet und entspricht der Außenform des Dichtelements.

Beim Spannen einer Schneidplatte durch das Spannelement passt sich, aufgrund des beweglich angeordneten Dichtelements im Werkzeughalter des Werkzeugsystems, das Dichtelement sowohl an das Spannelement als auch an den Werkzeughalter formschlüssig an. Es entstehen druckdichte Verbindungen zwischen der Fläche des Aufnahmebereichs des Werkzeughalters und der zylindrischen Außenfläche des Dichtelements und zwischen der Anlagefläche des Spannelements und der ebenen Fläche des Dichtelements.

Enden im Bereich der Schnittstelle zwischen dem Spannelement und dem Grundkörper mehrere Fluidkanäle, kann das Dichtelement mehrere Öffnungen zum Verbinden der mehreren Fluidkanäle aufweisen. Es ist auch möglich, dass mit Dichtelementen die an unterschiedlichen Positionen Öffnungen aufweisen, die Verbindung von einzelnen Kanälen hergestellt wird. So kann beispielsweise durch die Verwendung eines Dichtelements mit einer Öffnung an einer ersten Position die Verbindung eines Fluidkanals an einer ersten Position gewährleitet werden. Wird dieses Dichtelement durch ein anderes Dichtelement ersetzt, welches an einer zweiten Position eine Öffnung aufweist, so kann dadurch die Verbindung eines Kanals an einer zweiten Position hergestellt werden. Wird ein Dichtelement verwendet, welches an der ersten und an der zweiten Position eine Öffnung aufweist, so kann eine Verbindung zweier Kanäle hergestellt werden. Selbstverständlich erfordert dies, dass sowohl im Werkzeughalter wie auch im Spannelement wenigstens zwei Kanäle, bzw. Fluidkanäle vorhanden sind.

Der Betrag der Fläche des Dichtmittels kann größer sein, als der Betrag der Anlagefläche des Spannelements. Dies hat zur Folge, dass im gespannten Zustand des Werkzeugsystems die Anlagefläche des Spannelements vollständig innerhalb der Fläche des Dichtmittels angeordnet ist. Die Fläche des Dichtmittels überragt dann die Anlagefläche des Spannelements an ihrem gesamten Umfang. Zusätzlich ist es möglich, dass im gespannten Zustand des Werkzeugsystems die Fläche des Dichtmittels in einem Abstand zur Anlagefläche des Werkzeughalters angeordnet ist. Dabei kann dieser Abstand wenige hundertstel Millimeter bis ca. 1,5 mm betragen.

Die verwendeten Dichtelemente haben gemeinsam, dass durch deren bewegliche Anordnung, die Schnittstelle zwischen Spannelement und Grundkörper des Werkzeugsystems fluiddicht gestaltet werden kann. Das Dichtelement ist aus einem metallischen Werkstoff oder aus Keramik oder einem anderen geeigneten, nicht elastischen, Werkstoff gebildet. In diesem Zusammenhang wird ein Metall als nicht elastisch angesehen.

Erfindungsgemäß wird ein Werkzeugsystem mit einer Schnittstelle vorgeschlagen die Anlageflächen und ein Dichtelement aufweist. Das Dichtelement verbindet Leitungsabschnitte eines Fluidsystems zwischen einem Werkzeughalter und einem Spannelement fluiddicht miteinander. Das Dichtelement ist erfindungsgemäß im Werkzeughalter angeordnet. In einer nicht erfindungsgemäßen Alternative kann das Dichtelement im oder am Spannelement angeordnet sein.

**Bezugszeichenliste**

| | |
|---|---|
| 1 | Werkzeug system |
| 2 | Werkzeug halter |
| 4 | Spannelement |
| 5 | Vorsatz, Vorsprung, Nase von 4 |
| 6 | Schneidplatte |
| 7 | Mulde von 6 |
| 10 | Oberseite von 6 |
| 15 | Spannmittel |
| 17 | Plattensitz |
| 18 | erstes Ende von 4 |
| 19 | zweites Ende von 4 |
| 20 | Anlagefläche von 4 |
| 21, 21' | Flachseite von 4 |
| 22 | Anlagefläche von 2 |
| 23 | Befestigungsabschnitt von 15 |
| 24 | Spannabschnitt von 15 |
| 25 | Führungsabschnitt von 15 |
| 26 | Öffnung, Bohrung |
| 27 | Anschlag, Wand von 26 |
| 28 | Anlagefläche von 4, Anschlagmittel |
| 30, 30' | Schnittstelle |
| 31 | Element, Dichtelement, Dichtmittel |
| 32 | Dichtfläche, Fläche |
| 33, 34 | schmale Flachseite von 4 |
| 36 | Mantelfläche |
| 38 | Kanalsystem |
| 39, 40, 41 | Leitungsabschnitt von 2 |
| 42 | Leitungsabschnitt von 4 |
| 43 | Mittel zur Verbindung von Kanälen |
| 44 | Längsrichtung, horizonzale Beweglichkeit |
| 45 | Eingang von 38 |
| 46 | Ausgang |
| 47 | Ausgang |
| 48 | Oberfläche von 2 |
| 49 | Kopplung |
| 50 | Öffnung |
| 51 | Ausnehmung |
| 52 | Befestigungsmittel |
| 53 | Längsachse von 31 |
| 54 | Bewegungsrichtung |
| 56 | Verschlusskappen |
| 57 | Befestigungsabschnitt von 52 |
| 58 | Führungsabschnitt von 52 |
| 59 | Nut von 4 |
| 60 | Anlagefläche |
| 61 | Druckplatte |
| 63 | Ausnehmung |
| H | Höhe von 31 |
| D | Durchmesser von 31 |
| γ | Winkel |
| α | Winkel |

Nachfolgend wird die Erfindung anhand von Figuren erläutert. Dabei zeigt
- Figur1:: einen Querschnitt des Werkzeugsystems, umfassend ein Werkzeughalter, eine Schneidplatte, ein Spannelement und ein Dichtelement auszugsweise und in schematischer Darstellung,
- Figur 2: ein Dichtelement gemäß Figur 1 in schematischer Darstellung,
- Figur 3: ein Dichtelement gemäß Figur 1 in einer anderen Ausführung, in schematischer Darstellung,
- Figur 4:: einen Schnitt A-A durch den Werkzeughalter gemäß Figur 1 und das Dichtelement gemäß Figur 3,
- Figur 5:: ein Befestigungsmittel,
- Figur 6:: einen Querschnitt einer alternativen Ausführungsform eines Werkzeugsystems und
- Figur 7:: ein Dichtelement in einer alternativen Ausführungsform.

Alle Figuren enthalten ausschnittsweise, schematische Darstellungen der Erfindung und werden beispielhaft zur Erläuterung der Erfindung herangezogen. Spezielle Ausführungsformen der Erfindung können von diesen Figuren abweichen.

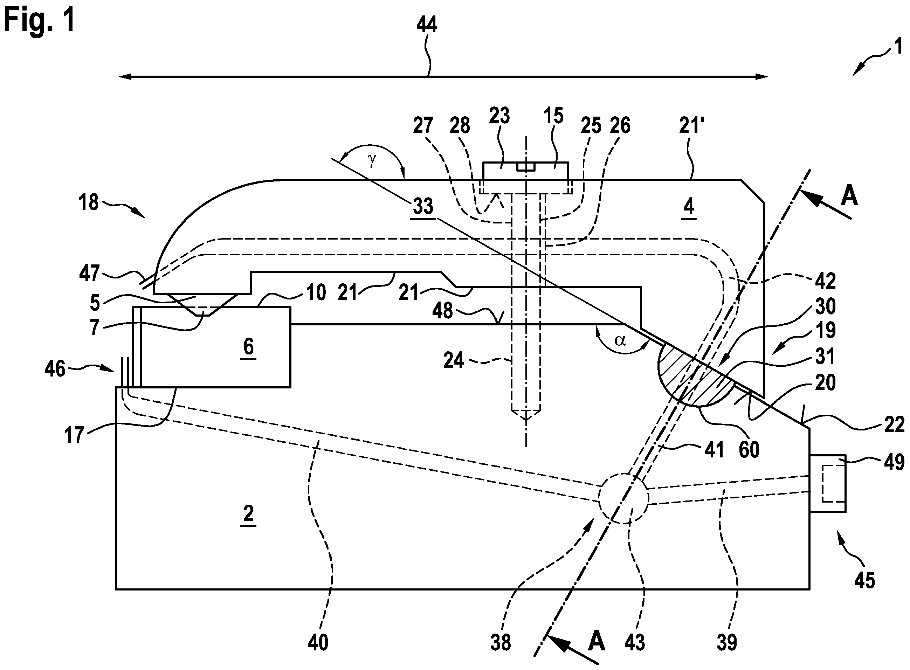

Figur 1 zeigt ein Werkzeugsystem 1, in schematischer Darstellung, umfassend einen Werkzeughalter 2, eine Schneidplatte 6, die an ihrer Oberseite 10 eine Mulde 7 aufweist und ein Spannelement 4 mit einer Nase 5, die im gespannten Zustand des Werkzeugsystems 1 in die Mulde 7 der Schneidplatte 6 greift. Das Spannelement 4, welches im Wesentlichen der Form eines Quaders entspricht, mit zwei breiten Flachseiten 21, 21' und zwei schmalen Flachseiten 33, 34, ist mittels eines Spannmittels 15 am Werkzeughalter 2 befestigt. Die Schneidplatte 6 ist bevorzugt auch als sogenannte Wendeschneidplatte ausgebildet und kann im Einsatz um 180 Grad gedreht in den Plattensitz 17 des Werkzeughalters 2 positioniert werden. Die Nase 5 ist am ersten Ende 18 des Spannelements 4 angeordnet. Am zweiten Ende 19 des Spannelements 4 weist dieses eine in einem Winkel angeordnete Fläche 20 auf. Vorzugsweise bildet diese Fläche 20 mit der Flachseite 21' der Oberseite des Spannelements 4 einen stumpfen Winkel Y im Bereich von 120 bis 170 Grad, besonders vorzugsweise von 145 bis 165 Grad.

Der Werkzeughalter 2 weist im Bereich der Fläche 20 des Spannelements 4 eine zu der Fläche 20 kongruente Fläche 22 auf. Die Fläche 22 ist in einem Winkel α zur Oberfläche 48 des Werkzeughalters 2 angeordnet. Sind die Flächen 21' und 48 parallel zueinander angeordnet, ist der Betrag beider Winkel α und Y identisch, d.h. gleich groß. Die Flächen 20 und 22 bilden eine schiefe Ebene. Der Werkzeughalter 2 ist im Werkzeugsystem ortsfest gehalten. Beim Befestigungsvorgang des Spannelements 4 an dem Werkzeughalter 2, d.h. beim Erzeugen eines Drehmoments beim Drehen (zudrehen) des Spannmittels 15 kann die Fläche 20 des Spannelements 4 auf der Fläche 22 des Werkzeughalters 2 (in der Figur 1 nach rechts und nach unten) gleiten. Durch diesen Spannmechanismus bewegt sich das Spannelement 4 relativ zu dem Werkzeughalter 2 und zieht und spannt über die Verbindung des Vorsprungs 5 mit der Mulde 7 der Schneidplatte 6, diese in den Plattensitz 17. Die Qualität der Oberflächen der Flächen 20 und 22 ist so gestaltet, dass ein Gleiten dieser Flächen aufeinander unterstützt wird. Eine Schnittstelle 30 zwischen dem Spannelement 4 und dem Werkzeughalter 2 wird durch die Flächen 20 und 22, auch Anlageflächen genannt gebildet.

Im Ausführungsbeispiel gemäß Figur 1 ist das Spannmittel 15 als Schraube, auch Spannschraube genannt, ausgeführt. Die Schraube 15 weist einen Befestigungsabschnitt 23, in Form eines Kopfes und einen im Wesentlichen zylindrisch ausgebildeten Spann- 24 und Führungsabschnitt 25 auf. Der Spannabschnitt 24 kann als Gewinde, beispielsweise als Außengewinde, ausgebildet sein, welches mit einem Gegenstück im Werkzeughalter 2, beispielsweise einem Innengewinde, einem Befestigungsmittel zusammenwirkt. Der Führungsabschnitt 25 der Schraube 15 kann als Anschlag zur Begrenzung der linearen Beweglichkeit, in Figur 1 der horizontalen Beweglichkeit 44 des Spannelements 4, dienen. Begrenzt wird diese Beweglichkeit durch das Zusammenwirken des Führungsabschnitts 25 der Schraube 15 mit dem Anschlag, der Wandung 27 der Öffnung 26 des Spannelements 4, durch die die Schraube 15 greift, um das Spannelement 4 am Werkzeughalter 2 zu befestigen. Durch diese Begrenzung wird verhindert, dass beim Spannen durch ein zu hohes Drehmoment die Schneidplatte 6 beschädigt wird. Die Öffnung 26 im Spannelement 4 kann beispielsweise als kreisrunde Bohrung ausgeführt sein. Es sind auch andere Formen dieser Öffnung 26, wie beispielsweise schlitzförmige oder ovale Öffnungen möglich. Alle Formen der Öffnung 26 weisen ein Anschlagmittel 28 und eine Wand 27 auf. Das Anschlagmittel 28 kann in Form einer Anlagefläche ausgebildet sein und wirkt mit dem Befestigungsmittel 23 der Schraube 15 zusammen. Die Wand 27 der Öffnung 26 wirkt mit dem Führungsabschnitt 25 des Spannmittels 15 zusammen. Das zwischen Außengewinde des Spannabschnitts 24 und Innengewinde des Werkzeughalters 2 vorhandene Spiel kann zum Ausgleich von Fertigungstoleranzen verwendet werden. Dieses Spiel ermöglicht vorzugsweise eine Bewegung des Spannelements 4, relativ zum Werkzeughalter 2, im Bereich von 0,1 bis 0,2 mm in alle Richtungen.

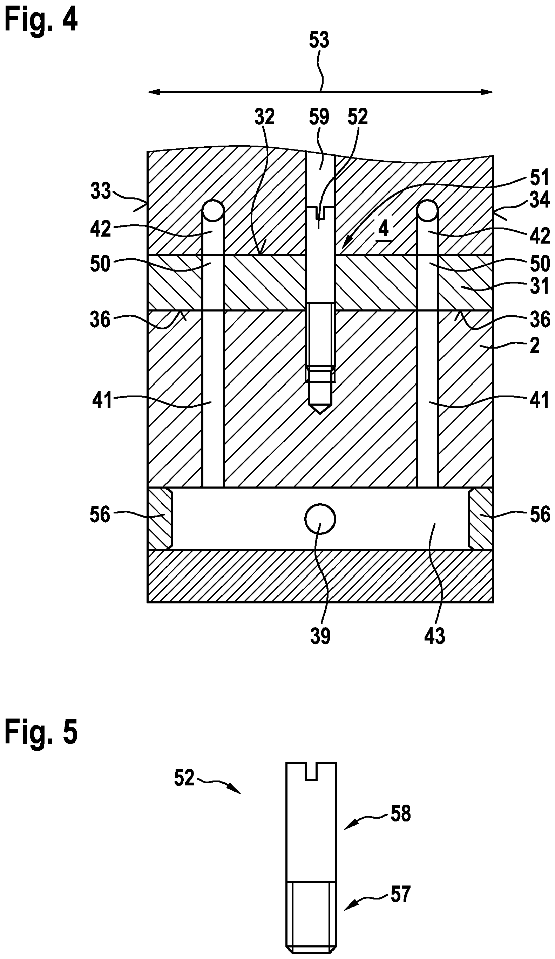

Figur 1 zeigt beispielhaft ein Kanalsystem 38, welches sich durch den Werkzeughalter 2 und das Spannelement 4 erstreckt. Das Kanalsystem 38 umfasst Leitungsabschnitte 39, 40, 41, die im Werkzeughalter 2 und Leitungsabschnitte 42, die im Spannelement 4 angeordnet sind. Diese Leitungsabschnitte 41, 39, und 40 werden über ein Mittel 43 verbunden. Bei diesem Verbindungsmittel 43 kann es sich um eine, quer zur Längsrichtung 44 des Werkzeugsystems, angeordnete Öffnung in Form einer Bohrung handeln, die an ihren beiden Öffnungen durch an sich bekannte Dichtmittel in Form von Verschlusskappen 56 (Figur 4) druckdicht geschlossen ist.

Wie aus Figur 1 ersichtlich verbindet das Mittel 43 drei (3) Leitungsabschnitte 39, 40, 41. Es ist auch möglich über ein Mittel 43 mehr als drei Leitungsabschnitte miteinander zu verbinden. Abhängig von Anwendungsbereich können Leitungsabschnitte in verschiedener Anzahl (2 bis 10 oder mehr als 10) erforderlich sein. Alle vorhandenen Leitungsabschnitte im Werkzeughalter 2 können über eine oder mehrere Mittel 43 miteinander verbunden sein. In einem besonderen Ausführungsbeispiel kann auch das Spannelement 4 mehrere Leitungsabschnitte 42 aufweisen. Diese mehreren Leitungsabschnitte 42 können getrennt voneinander im Spannelement 4 angeordnet sein oder auch durch Mittel ähnlich dem Mittel 34 miteinander verbunden sein.

Das Kanalsystem 38 erstreckt sich von einem Eingang 45 zu den Ausgängen 46 und 47. Am Eingang 45 kann das Kanalsystem 38 mit einer an sich bekannten Kopplung 49, mit einer Druckfördereinrichtung (nicht dargestellt) die bis zu 120 bar Druck erzeugen kann, verbunden sein. Zwischen dem Eingang 45 und dem Ausgang 46 im Werkzeughalter kann das Verbindungsmittel 43 angeordnet sein. Zwischen dem Eingang 45 und dem Ausgang 47 im Spannelement ist an der Schnittstelle 30 ein erfindungsgemäßes Dichtelement 31 angeordnet. Mittels dieses Dichtelements 31 kann eine fluiddichte Verbindung zwischen dem Leitungsabschnitt 41 im Werkzeughalter 2, der an einer Anlagefläche 60 endet, und dem Leitungsabschnitt 42 im Spannelement 4 hergestellt werden.

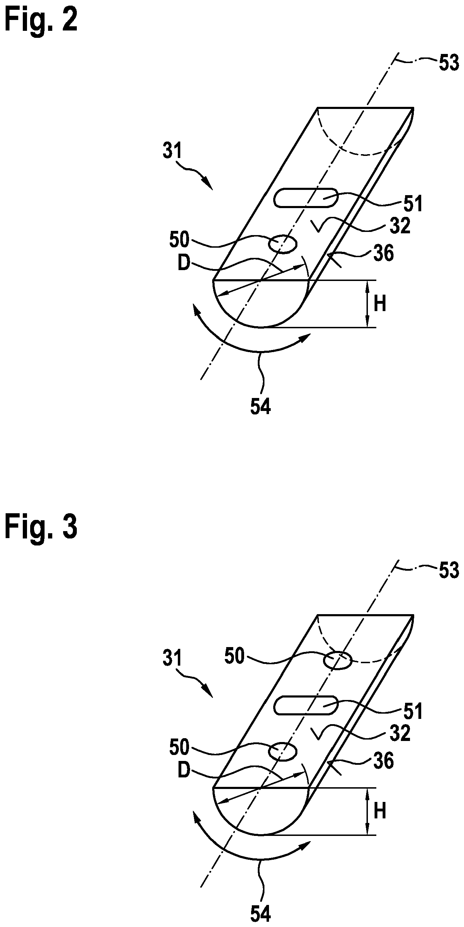

Figur 2 zeigt das Dichtelement 31 in perspektivischer, schematischer Darstellung. Das Dichtelement 31 besteht aus Metall und weist eine zylindrische Mantelfläche 36, sowie eine Dichtfläche 32 auf. Das Dichtelement 31 kann auch aus einem anderen nicht elastischen Werkstoff wie beispielsweise Keramik, Hartmetall oder einem nicht elastischen Kunststoff gebildet sein. Die zylindrische Mantelfläche 36 hat im Ausführungsbeispiel die Form eines Halbkreises und wird an den Stirnseiten durch quer zur Längsachse 53 des Dichtelements 31 angeordnete Abschlussflächen begrenzt. Die Form des Dichtelements 31 entspricht im Wesentlichen einem abgeflachten zylindrischen Körper, ein Zylinder, der eine Fläche 32 aufweist. Die Fläche 32 kann entlang der Mittelachse des Zylinders angeordnet sein. Im Ausführungsbeispiel gemäß Figur 2 entspricht die Querschnittsfläche einem Halbkreis. Die Fläche 32 kann auch unterhalb oder oberhalb der Mittelachse angeordnet sein. Ist die Fläche unterhalb der Mittelachse angeordnet, kann die Höhe H des Dichtelements im Bereich von 1/5 bis ½ des Durchmessers D vorzugsweise 1/3 betragen. In einer bevorzugten Ausführungsform ist die Fläche 32 oberhalb der Mittelachse des Dichtelements 31 angeordnet. Dann ist die Höhe H des Dichtelements 31 in einem Bereich von 1/2 bis zu 4/5 des Durchmessers D, vorzugsweise 3/5 angeordnet.

Das Dichtelement 31 ist im Werkzeughalter 2, quer zu seiner Längsachse 53 verliersicher angeordnet, wenn die Fläche 32 des Dichtelements oberhalb der Mittelachse des Dichtelements angeordnet ist und das Dichtelement 31 in einer zylindrischen Ausnehmung im Werkzeughalter 2 beweglich gehalten ist. Dabei ist es erforderlich, dass die Mittelachse der zylindrischen Ausnehmung in der das Dichtelement 31 gelagert ist, in einem Abstand zur Fläche 22 angeordnet ist. Vorzugsweise ist die Mittelachse der zylindrischen Ausnehmung innerhalb des Werkzeughalters 2 angeordnet. Bei diesem Ausführungsbeispiel (nicht dargestellt) kann das Dichtelement ausschließlich in Längsrichtung 53 in die Öffnung, die die Anlagefläche 60 aufweist im Werkzeughalter 2 eingebracht werden. Quer zur Längsachse 53 ist das Dichtlement 31 aufgrund der Anordnung der Öffnung (Mittelachse innerhalb des Werkzeughalters) verliersicher angeordnet. In Längsrichtung wird das Dichtelement 31 durch das Befestigungsmittel 52 (Figur 4) verliersicher gehalten.

Das Dichtelement 31 gemäß Figur 2 weist eine Ausnehmung 51, beispielsweise in Form eines Langloches auf. Die Ausnehmung 51 erstreckt sich ausgehend von der Dichtfläche 32 bis zur Mantelfläche 36, durch das Dichtelement hindurch. Es handelt sich um eine durchgehende Ausnehmung. Die Weite der Ausnehmung 51, gemessen in Längsrichtung 53 des Dichtelements 31, ist geringer als die Weite, gemessen in Querrichtung des Dichtelements 31. Die Weite der Ausnehmung 51, gemessen in Längsrichtung 53 des Druckelements 31, wird als Breite und die Weite der Ausnehmung 51, gemessen in Querrichtung des Druckelements 31, wird als Länge der Ausnehmung 51 bezeichnet. Mittels einem in der Ausnehmung 51 des Dichtelements 31 angeordnetem Befestigungsmittel 52 (Figur 4), kann das Dichtelement im Werkzeughalter 2 in Querrichtung fixiert werden. Das Befestigungsmittel 52 ist im Werkzeughalter 2 ortsfest angeordnet. Erfindungsgemäß ist das Dichtelement 31 pendelnd, rotativ beweglich angeordnet. Die Beweglichkeit des Dichtelements 31 ist mit dem Pfeil 54 in Figur 2 angedeutet. Das rotativ beweglich angeordnete Dichtelement 31 kann sich beim Spannvorgang der Schneidplatte 6 orientieren und ausrichten, wobei sich die Dichtfläche 32 des Dichtelements 31 an die Fläche 20 des Spannelements 4 anpasst.

Das Dichtelement 31 enthält eine Öffnung 50, die zur Ausnehmung 51 beabstandet angeordnet ist. Die Öffnung 50 erstreckt sich von der Fläche 32 bis zur Mantelfläche 36 durch das Dichtelement 31 hindurch. Im Bereich der Fläche 32 kann der Querschnitt der Öffnung 50 denselben Querschnitt aufweisen wie der Leitungsabschnitt 42 des Spannelements 4 im Bereich der Fläche 20. Der Querschnitt der Öffnung 50 im Bereich der Mantelfläche 36 kann denselben Querschnitt aufweisen, wie der Leitungsabschnitt 41 im Bereich der Anlagefläche 36 im Werkzeughalter 2.

Figur 3 zeigt eine andere Ausführungsform des Dichtelements 31. Dieses Dichtelement weist zwei Öffnungen 50 auf. Dadurch ist es möglich zwei Fluidkanäle 41 im Werkzeughalter 2 über das Dichtelement 31 mit zwei Fluidkanälen 42 im Spannelement 4 zu verbinden. Ansonsten gelten für gleiche Merkmale die gleichen Bezugszeichen und die obige Beschreibung entsprechend.

Aus Figur 4 ist die bewegliche Anordnung des Dichtelements 31 im Werkzeughalter 2 sowie die Verbindung der Leitungsabschnitte 39 und 41 mit dem Mittel 43 ersichtlich. Bei dem Verbindungsmittel 43 kann es sich um eine parallel zur Längsachse 53 des Dichtelements 31 angeordnete Öffnung, beispielsweise eine Bohrung handeln. Diese Öffnung 43 ist an ihren beiden Enden durch Verschlusskappen 56 druckdicht verschlossen. Die Leitungsabschnitte 39, 40 (nicht dargestellt) und 41 sind mit dem Mittel 43 verbunden. Ein Fluid, welches beispielsweise über den Leitungsabschnitt 39 in den Werkzeughalter eingebracht wird, teilt sich im Mittel 43 und fließt über die Leitungsabschnitte 41, 40 an ihren Bestimmungsort.

Das Dichtmittel 31 ist mit dem Befestigungsmittel 52, beispielsweise einem Gewindestift im Werkzeughalter 2 angeordnet. Das Befestigungsmittel 52 weist mehrere Bereiche auf (Figur 5). In einem Befestigungsabschnitt 57 können formschlüssige Mittel, beispielweise ein Gewinde angeordnet sein. In einem Führungsabschnitt 58 können Führungsmittel, beispielsweise in Form einer Feder oder eines Stiftes angeordnet sein. Der Werkzeughalter 2 weist einen Bereich auf, in den das Befestigungsmittel 52 formschlüssig befestigt, beispielsweise geschraubt ist. Dazu greift der Befestigungsabschnitt 57 des Befestigungsmittels 52 komplett in den Werkzeughalter 2 ein. Der Führungsabschnitt 58 des Befestigungsmittels 52, der einen stiftähnlichen zylindrischen Abschnitt aufweist, bildet mit der Breite der Ausnehmung 51 des Dichtelements 31 ein Arretierungsmittel. Dadurch wird das Dichtelement 31 in Richtung der Längsachse 53 des Dichtelements 31 fixiert. Die Länge der Ausnehmung 51 ist größer als der Durchmesser des Führungsabschnitts 58 des Befestigungsmittels 52. Dadurch ist das Dichtmittel 31 quer zur Längsachse 53 beweglich gelagert. Somit können Toleranzen, die bei der Herstellung des Werkzeugsystems entstehen, ausgeglichen werden. Durch das beweglich angeordnete Dichtmittel 31 kann sich die Dichtfläche 32 an die Lage der Fläche 20 des Spannelements 4 anpassen. Durch den Spannvorgang des Spannelements 4 mittels des Spannmittels 15 entsteht eine druckdichte Schnittstelle, eine formgetreue, dichte Weiterführung des Leitungsabschnitts 41 vom Werkzeughalter 2 über das Dichtmittel 31 in den Leitungsabschnitt 42 in das Spannelement 4.

Der Führungsabschnitt 58 des Befestigungsmittels 52 überragt das Dichtmittel 31 und greift in eine Nut 59 des Spannelements 4. Der Führungsabschnitt 58 des Befestigungsmittels 52 bildet mit der Nut des Spannelements 4 eine Arretierung. Dadurch ist eine positionsgenaue Fixierung des Spannelements 4 im Bereich des zweiten Endes 19 gewährleistet. Somit kann eine fluiddichte Schnittstelle zwischen Dichtmittel 31 und Spannelement 4 sichergestellt werden. Der Leitungsabschnitt 41 des Werkzeughalters 2 geht mittels des Dichtmittels 31 fluiddicht in den Leitungsabschnitt 42 des Spannelements 2 über.

Erfindungsgemäß weist die Fläche 20 des Spannelements 4 sowie die Mantelfläche 36, und die Fläche 32 des Dichtelements einen Mittenrauwert Ra von höchstens 1,6 µm und eine gemittelte Rautiefe Rz von 6,3 µm auf. Dies liegt im Bereich der Qualität für Dichtflächen. Dadurch ist eine fluiddichte Verbindung möglich.

Das Werkzeugsystem 1 kann aus Elementen 2, 4, 31, 15 bestehen, die beispielsweise aus Vollmaterial hergestellt werden. Es ist auch möglich, einzelne dieser Elemente, beispielsweise das Spannelement 4, mittels additiven Fertigungsprozessen herzustellen. Dadurch kann die Lage, die Richtung, die Führung und der Querschnitt der Leitungsabschnitte 42 nahezu beliebig angeordnet und an die Prozessbedingungen angepasst werden.

In einem anderen Ausführungsbeispiel (nicht dargestellt) weist das Werkzeugsystem zusätzlich eine Stützplatte auf, die unterhalb der Schneidplatte am Werkzeughalter angeordnet ist. Diese Stützplatte kann auch Fluidkanäle enthalten, über die das Kühlmedium an sein Bestimmungsort geleitet wird. Die Stützplatte kann mittels einem additiven oder anderem Herstellungsverfahren beispielsweise einem Sinterprozess hergestellt werden. Sie kann aus Metall, Hartmetall oder Keramik gebildet sein.

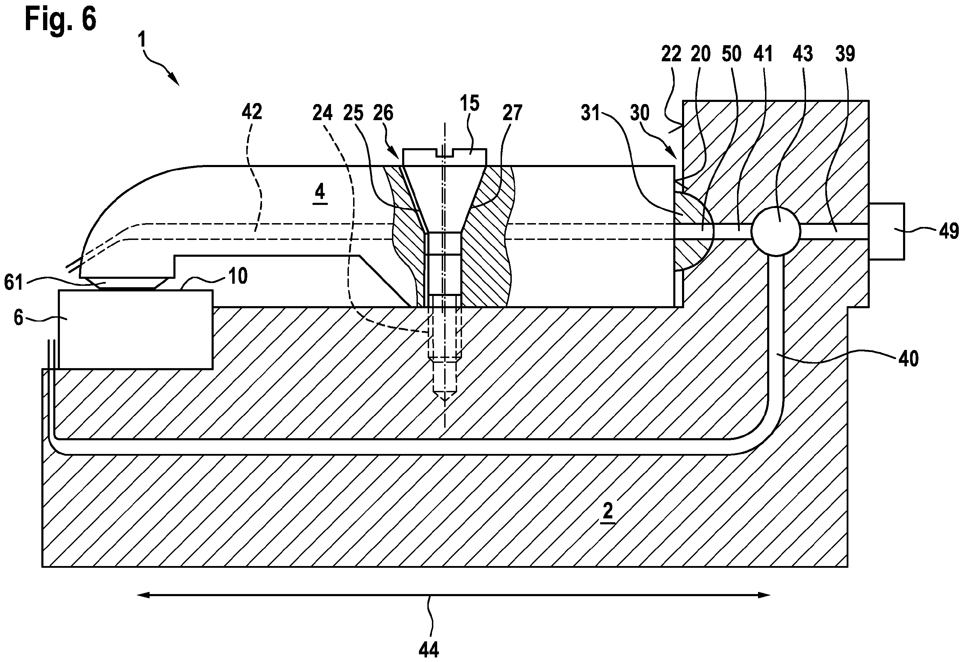

In einem erfindungsgemäßen Ausführungsbeispiel des Werkzeugsystems 1 kann die Dichtfläche 32 des Dichtelements 31 zur Anlagefläche 22 des Werkzeughalters 2 beabstandet angeordnet sein. Dabei ist der Abstand von der Anlagefläche 22 zur Dichtfläche 32 positiv (siehe Figur 1 und 6). Bei diesem Ausführungsbeispiel bewegt sich beim Spannvorgang das Spannelement 4 auf den Werkzeughalter 2 zu, wobei die Anlagefläche 20 vom Spannelement 4 auf der Dichtfläche 32 des Dichtelements 31 gleitet. Die Bewegung des Spannelements 4 in Längsrichtung 44 wird durch den Anschlag 27 der Öffnung 26 begrenzt, wenn der Führungsabschnitt 25 des Spannmittels 15 an diesem Anschlag anliegt. Der Abstand der Wand 27 bis zu den Mündungen der Leitungsabschnitten 41, 42 und Öffnungen 50 ist so bemessen, dass im gespannten Zustand die Mittelachsen der Leitungsabschnitte 41, 42 und der Öffnungen 50 des Dichtmittels 31 miteinander konzentrisch angeordnet sind. Dadurch wird in Verbindung mit der beweglichen Lagerung des Dichtmittels 31 eine fluiddichte Übergabe eines Mediums sichergestellt.

Figur 6 zeigt ein anderes Ausführungsbeispiel eines erfindungsgemäßen Werkzeugsystems 1. Die Schnittstelle 30 ist wiederum durch die Anlagefläche 20 vom Spannelement 4 und die Anlagefläche 22 vom Werkzeughalter 2 gebildet. Die Anlageflächen 20 und 22 sind quer, beispielsweise in einem Winkel von 90 Grad zur Längsrichtung 44 angeordnet. Im Bereich der Schnittstelle 30 ist das Dichtelement 31 angeordnet das eine fluiddichte Verbindung zwischen dem Leitungsabschnitt 41 und dem Leitungsabschnitt 42 gewährleistet. Beim Spannvorgang gemäß dem Ausführungsbeispiel nach Figur 6 wird die relative Bewegung des Spannelements 4 mittels des konisch ausgebildeten Führungsabschnitts 25 des Spannmittels 15, in Zusammenwirkung mit einem konisch ausgebildetem Anschlag 27 der Öffnung 26 des Spannelements 4 realisiert. Dabei ist erforderlich, dass der Abstand der Mittelachse des konischen Anschlags 27 der Öffnung 26 im Spannelement 4 zum Dichtmittel 31 bei diesem Ausführungsbeispiel größer ist als der Abstand der Mittelachse des Befestigungsmittels (beispielsweise des Innengewindes) im Werkzeughalter 2 in dem der Spannabschnitts 24 des Spannmittels 15 befestigt ist. Dann weist die Mittelinie, bzw. Mittelachse der Öffnung 26 im Spannelement 4 einen kleineren Abstand zur Schneidplatte 6 auf als die Mittellinie des Befestigungsmittel im Werkzeughalter 2 (Figur 6). Die Schneidplatte 6 im Ausführungsbeispiel nach Figur 6 weist eine glatte Oberseite 10 ohne Mulde auf. Die Befestigung der Schneidplatte 6 durch das Spannelement 4 erfolgt mittels einer Druckplatte 61 die beweglich am Spannelement 4 gehalten ist. Die Druckplatte 61 weist eine gegenüber der Oberseite 10 angeordnete glatte Spannfläche auf.

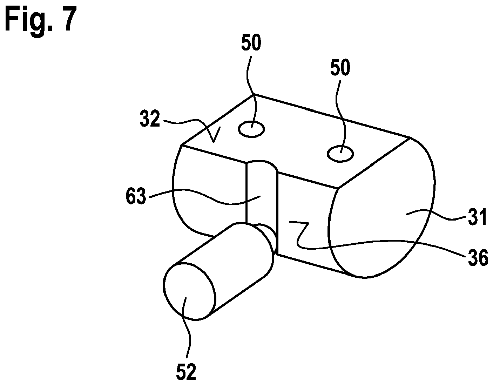

Figur 7 zeigt ein Dichtelement 31 mit reduzierter Ausdehnung in Längsrichtung. Diese verkürzte Länge ermöglicht lediglich Öffnungen 50 zur Verbindung der Leitungsabschnitte 41, 42 der Fluidkanäle. Eine wie oben beschriebene Ausnehmung in Form eines Langloches zur verliersicheren Anordnung des Dichtmittels ist nicht möglich. Deshalb weist das Dichtelement 31 an seiner Mantelfläche eine Ausnehmung 63 in Form einer gerundeten Rille auf. In diese Rille 63 greift ein Mitnehmer, beispielsweise eine Kugel eines Befestigungsmittels 52, auch bekannt als federndes Druckstück ein. Das Befestigungsmittel 52 ist ortsfest gehalten. Das Dichtelement 31 ist im Werkzeughalter 2 angeordnet und mit dem Befestigungsmittel 52 im Werkzeughalter 2 befestigt. Ist das Dichtelement 31 nicht erfidungsgemäß am oder im Spannelement 4 angeordnet, ist das Befestigungsmittel 52 im Spannelement 4 befestigt. Ansonsten gelten für gleiche Merkmale die gleichen Bezugszeichen und die obige Beschreibung entsprechend.

Die Ausführungsbeispiele gemäß Figur 1 und Figur 6 unterscheiden sich dadurch, dass die Schnittstelle 30 an einer anderen Position angeordnet ist, die Realisierung der relativen Bewegung des Spannelements 4 durch Mittel die außerhalb der Schnittstelle angeordnet sind und die Verwendung einer Schneidplatte mit einer glatten Oberfläche. Ansonsten gelten für gleiche Merkmale die gleichen Bezugszeichen und die obige Beschreibung entsprechend.

Im Rahmen der nachfolgenden Ansprüche sind auch Ausführungsbeispiele möglich, die verschiedene Kombinationen der obigen Ausführungsmöglichkeiten (Position und Ausführung der Schnittstelle, Realisierung der relativen Beweglichkeit des Spannelements, Schneidplatte mit oder ohne Mulde) umfassen.

## Patentansprüche

1. Werkzeugsystem (1) mit einem Werkzeughalter (2), der einen Plattensitz (17) zur Aufnahme einer Schneidplatte (6) und entfernt von diesem Plattensitz (17) eine erste Anlagefläche (22) aufweist, mit einem Spannelement (4), das eine Öffnung (26) mit einem Anschlag (27) zur Aufnahme eines Spannmittels (15) und eine zweite Anlagefläche (20) aufweist, wobei die erste Anlagefläche (22) und die zweite Anlagefläche (20) eine Schnittstelle (30) zwischen dem Werkzeughalter (2) und dem Spannelement (4) bilden und wobei sowohl der Werkzeughalter (2) wie auch das Spannelement (4) Leitungsabschnitte (39, 40, 41, 42) aufweisen und die Schnittstelle (30) ein Dichtmittel (31) umfasst, **dadurch gekennzeichnet, dass** das Dichtmittel (31) im gespannten und nicht gespannten Zustand des Werkzeugsystems mit einem Befestigungsmittel (52) im Werkzeughalter (2) angeordnet ist und der Werkstoff des Dichtmittels (31) nicht elastisch ist.

2. Werkzeugsystem nach Anspruch 1, **dadurch gekennzeichnet, dass** das Dichtmittel (31) im nicht gespannten Zustand des Werkzeugsystems in axialer Richtung (53), d.h. in Längsrichtung des Dichtmittels verliersicher angeordnet ist.

3. Werkzeugsystem nach Anspruch 1 oder 2, **dadurch gekennzeichnet, dass** das Dichtmittel (31) im nicht gespannten Zustand des Werkzeugsystems rotativ beweglich angeordnet ist.

4. Werkzeugsystem nach einem der Ansprüche 1 bis 3, **dadurch gekennzeichnet, dass** das Dichtmittel (31) wenigstens eine Öffnung (50) aufweist, mit der im gespannten Zustand des Werkzeugsystems, eine Verbindung zwischen einem Leitungsabschnitt (41) im Werkzeughalter (2) und einem Leitungsabschnitt (42) im Spannelement (4) möglich ist.

5. Werkzeugsystem nach Anspruch 4, **dadurch gekennzeichnet, dass** es sich bei der Verbindung um eine fluiddichte Verbindung handelt.

6. Werkzeugsystem nach einem der Ansprüche 1 bis 5, **dadurch gekennzeichnet, dass** das Dichtmittel (31) aus Metall gefertigt ist.

7. Werkzeugsystem nach einem der Ansprüche 1 bis 5, **dadurch gekennzeichnet, dass** das Dichtmittel (31) aus Keramik gefertigt ist.

8. Werkzeugsystem nach Anspruch 1, **dadurch gekennzeichnet, dass** das Spannelement (4) mittels eines additiven Fertigungsverfahrens hergestellt wird.

9. Werkzeugsystem nach einem der Ansprüche 1 bis 8, **dadurch gekennzeichnet, dass** das Spannelement (4) im gespannten und nicht gespannten Zustand des Werkzeugsystems eine Flachseite (21, 21') und der Werkzeughalter (2) eine Oberfläche (48) aufweist und dass die Schnittstelle (30) in einem Winkel (γ, α) zu der Flachseite (21, 21') und der Oberfläche (48) angeordnet ist.

10. Werkzeugsystem nach einem der Ansprüche 1 bis 9 mit einer Schneidplatte (6), **dadurch gekennzeichnet, dass** das Spannelement (4) eine Nase (5) mit einer Ringfläche und dass die Schneidplatte (6) eine Mulde (7) mit einer Ringfläche aufweist, wobei im gespannten Zustand des Werkzeugsystems die Nase (6) des Spannelements (4) in die Mulde (7) der Schneidplatte (6) greift und dadurch die Schneidplatte (6) im Plattensitz (17) des Werkzeughalters (2) gespannt ist.

11. Werkzeugsystem nach Anspruch 10, **dadurch gekennzeichnet, dass** die Krafteinleitung mittels des Spannmittels (15) über das Spannelement (4) und der Nase (5) und deren Ringfläche auf die Ringfläche der Mulde (7) erfolgt.

12. Werkzeugsystem nach Anspruch 11, **dadurch gekennzeichnet, dass** die Krafteinleitung über einen Bereich von 360° der Ringfläche des Spannelements (4) auf die Ringfläche der Mulde (7) erfolgt.

## Claims

1. Tool system (1) comprising a tool holder (2) which has a plate seat (17) for receiving a cutting plate (6) and has a first contact surface (22) remote from this plate seat (17), and comprising a clamping element (4) which has an opening (26) comprising a stop (27) for receiving a clamping means (15) and has a second contact surface (20), the first contact surface (22) and the second contact surface (20) forming an interface (30) between the tool holder (2) and the clamping element (4), and the tool holder (2) and the clamping element (4) having line portions (39, 40, 41, 42) and the interface (30) comprising a sealing means (31), **characterized in that** the sealing means (31) is arranged in the tool holder (2) by means of a fastening means (52) when the tool system is in the clamped and non-clamped state, and the material of the sealing means (31) is not resilient.

2. Tool system according to claim 1, **characterized in that** the sealing means (31) is captively arranged in the axial direction (53), i.e. in the longitudinal direction of the sealing means, when the tool system is in the non-clamped state.

3. Tool system according to either claim 1 or claim 2, **characterized in that** the sealing means (31) is arranged so as to be rotationally movable when the tool system is in the non-clamped state.

4. Tool system according to any of claims 1 to 3, **characterized in that** the sealing means (31) has at least one opening (50) by means of which, when the tool system is in the clamped state, a connection between a line portion (41) in the tool holder (2) and a line portion (42) in the clamping element (4) is possible.

5. Tool system according to claim 4, **characterized in that** the connection is a fluid-tight connection.

6. Tool system according to any of claims 1 to 5, **characterized in that** the sealing means (31) is made of metal.

7. Tool system according to any of claims 1 to 5, **characterized in that** the sealing means (31) is made of ceramic.

8. Tool system according to claim 1, **characterized in that** the clamping element (4) is produced by means of an additive manufacturing process.

9. Tool system according to any of claims 1 to 8, **characterized in that** the clamping element (4) has a flat face (21, 21') when the tool system is in the clamped and non-clamped state and the tool holder (2) has a surface (48), and **in that** the interface (30) is arranged at an angle (γ, α) to the flat face (21, 21') and the surface (48).

10. Tool system according to any of claims 1 to 9 comprising a cutting plate (6), **characterized in that** the clamping element (4) has a nose (5) comprising an annular surface and **in that** the cutting plate (6) has a depression (7) comprising an annular surface, the nose (6) of the clamping element (4) engaging in the depression (7) in the cutting plate (6) when the tool system is in the clamped state and the cutting plate (6) thereby being clamped in the plate seat (17) of the tool holder (2).

11. Tool system according to claim 10, **characterized in that** force is applied to the annular surface of the depression (7) by means of the clamping means (15) via the clamping element (4) and the nose (5) and the annular surface thereof.

12. Tool system according to claim 11, **characterized in that** force is applied to the annular surface of the depression (7) via a region of 360° of the annular surface of the clamping element (4).

## Revendications

1. Système d'outil (1) comprenant un porte-outil (2) qui comporte un logement de plaquette (17) destiné à recevoir une plaquette de coupe (6) et, à distance dudit logement de plaquette (17), une première surface d'appui (22), comprenant un élément de serrage (4) qui comporte une ouverture (26) dotée d'une butée (27) destinée à recevoir un moyen de serrage (15) et une seconde surface d'appui (20), la première surface d'appui (22) et la seconde surface d'appui (20) formant une interface (30) entre le porte-outil (2) et l'élément de serrage (4), et le porte-outil (2) ainsi que l'élément de serrage (4) comportant des sections de conduite (39, 40, 41, 42) et l'interface (30) comprenant un moyen d'étanchéité (31), **caractérisé en ce que**, à l'état serré et desserré du système d'outil, le moyen d'étanchéité (31) est disposé dans le porte-outil (2) à l'aide d'un moyen de fixation (52), et **en ce que** la matière du moyen d'étanchéité (31) n'est pas élastique.

2. Système d'outil selon la revendication 1, **caractérisé en ce que**, à l'état serré du système d'outil, le moyen d'étanchéité (31) est disposé de manière étanche aux pertes dans la direction axiale (53), c'est-à-dire dans la direction longitudinale du moyen d'étanchéité.

3. Système d'outil selon la revendication 1 ou 2, **caractérisé en ce que**, à l'état desserré du système d'outil, le moyen d'étanchéité (31) est disposé pour être mobile en rotation.

4. Système d'outil selon l'une des revendications 1 à 3, **caractérisé en ce que** le moyen d'étanchéité (31) comporte au moins une ouverture (50) qui, à l'état serré du système d'outil, permet d'établir une liaison entre une section de conduite (41) dans le porte-outil (2) et une section de conduite (42) dans l'élément de serrage (4).

5. Système d'outil selon la revendication 4, **caractérisé en ce que** la liaison est une liaison étanche aux fluides.

6. Système d'outil selon l'une des revendications 1 à 5, **caractérisé en ce que** le moyen d'étanchéité (31) est en métal.

7. Système d'outil selon l'une des revendications 1 à 5, **caractérisé en ce que** le moyen d'étanchéité (31) est en céramique.

8. Système d'outil selon la revendication 1, **caractérisé en ce que** l'élément de serrage (4) est fabriqué au moyen d'un procédé de fabrication additif.

9. Système d'outil selon l'une des revendications 1 à 8, **caractérisé en ce que**, à l'état serré et desserré du système d'outil, l'élément de serrage (4) comporte un côté plat (21, 21') et le porte-outil (2) comporte une surface (48), et **en ce que** l'interface (30) est disposée selon un angle (γ, α) par rapport au côté plat (21, 21') et à la surface (48).

10. Système d'outil selon l'une des revendications 1 à 9, comprenant une plaquette de coupe (6), **caractérisé en ce que** l'élément de serrage (4) comporte un nez (5) doté d'une surface annulaire, et **en ce que** la plaquette de coupe (6) comporte un creux (7) doté d'une surface annulaire, dans lequel, à l'état serré du système d'outil, le nez (6) de l'élément de serrage (4) vient en prise dans le creux (7) de la plaquette de coupe (6), ce qui permet le serrage de la plaquette de coupe (6) dans le logement de plaquette (17) du porte-outil (2).

11. Système d'outil selon la revendication 10, **caractérisé en ce que** la force est appliquée sur la surface annulaire du creux (7) au moyen du moyen de serrage (15) par l'intermédiaire de l'élément de serrage (4) et du nez (5) et de sa surface annulaire.

12. Système d'outil selon la revendication 11, **caractérisé en ce que** la force est appliquée sur la surface annulaire du creux (7) par l'intermédiaire d'une zone de 360° de la surface annulaire de l'élément de serrage (4).
